# EUROPÄISCHE PATENTSCHRIFT

(11) **EP 3 870 943 B1**
(45) Veröffentlichungstag und Bekanntmachung des Hinweises auf die Patenterteilung: **14.05.2025**
(21) Anmeldenummer: 19794929.0
(22) Anmeldetag: 22.10.2019
(51) Int. Cl.: G01J 3/02, G01J 3/26, G01J 3/30, G01J 3/453

(54) **INTERFEROMETERELEMENT, SPEKTROMETER UND VERFAHREN ZUM BETREIBEN EINES INTERFEROMETERS**
INTERFEROMETER ELEMENT, SPECTROMETER AND METHOD FOR OPERATING AN INTERFEROMETER
ÉLÉMENT D'INTERFÉROMÈTRE, SPECTROMÈTRE ET PROCÉDÉ DE FONCTIONNEMENT D'UN INTERFÉROMÈTRE

(30) Priorität: 22.10.2018 DE 102018217996
(43) Veröffentlichungstag der Anmeldung: 01.09.2021
(73) Patentinhaber: Robert Bosch GmbH, 70442 Stuttgart (DE)
(72) Erfinder: NOLTEMEYER, Ralf, 71083 Herrenberg (DE); STEIN, Benedikt, 70193 Stuttgart (DE); HUBER, Christian, 71638 Ludwigsburg (DE); SCHELLING, Christoph, 70619 Stuttgart (DE); KRAEMMER, Christoph Daniel, 76137 Karlsruhe (DE); ROEDEL, Reinhold, 72760 Reutlingen (DE)
(86) Internationale Anmeldenummer: PCT/EP2019/078658
(87) Internationale Veröffentlichungsnummer: WO 2020/083875

(56) Entgegenhaltungen:
- WO-A1-2018/043926
- US-A1- 2010 097 613
- US-A1- 2014 098 371
- US-A1- 2014 198 388
- US-B1- 6 424 466
- US-B1- 7 844 145
- JUNG B Y ET AL: "Control of resonant wavelength from organic light emitting materials by use of a Fabry-Perot microcavity structure", APPLIED OPTICS, OPTICAL SOCIETY OF AMERICA, WASHINGTON, DC; US, vol. 41, no. 16, 1 June 2002 (2002-06-01), pages 3312 - 3318, XP002345077, ISSN: 0003-6935, DOI: 10.1364/AO.41.003312

## Beschreibung

### Stand der Technik

Die Erfindung geht von einem Interferometerelement, einem Spektrometer und einem Verfahren nach Gattung der unabhängigen Ansprüche aus. Gegenstand der vorliegenden Erfindung ist auch ein Computerprogramm.

Herkömmliche mikromechanische Fabry-Pérot-Interferometer (FPI) bestehen aus zwei Spiegelelementen, die auf einem Substrat über eine Apertur angeordnet sind. Daneben gibt es Interferometer, die sogar aus zwei Substraten mit Aperturen konstruiert sind. Der Lichtstrahl sollte durch die Sandwichbauform mit zwei hochreflektierenden Spiegeln geleitet werden, wobei jeweils schmalbandige Bereiche um eine Resonanzwellenlänge und deren Obertöne in Abhängigkeit vom Abstand der beiden Spiegel transmittiert werden. Durch Variation des Abstandes kann die gewünschte Resonanzwellenlänge eingestellt werden, in einem nachfolgenden Detektor gemessen und so seriell ein Spektrum aufgenommen werden. Ein zusätzlicher sich davor befindender Bandpassfilter kann die gewünschte Ordnung herausfiltern, sodass Fehler durch andere Ordnungen minimiert werden. Dadurch ist der messbare Wellenlängenbereich auf maximal den Bereich zwischen der gewünschten Ordnung und der nächsthöheren Ordnung begrenzt. Dieser Wellenlängenbereich (freier Spektralbereich) ist größer bei niedrigen Ordnungen, bei denen jedoch die Auflösung in der Wellenlängendomäne verschlechtert ist. Aufgrund des statischen Bandpassfilters und des spektralen Abstands der Obertöne ist der Wellenlängenmessbereich des FPls stark begrenzt, sodass die Anwendungsvielfalt stark eingeschränkt wird.

Das Dokument US 2014/098371 A1 offenbart ein Fourier-Transformationsmikrospektrometer, welches auf räumlich verschobenen Interferrogramm-Bursts basiert.

Das Dokument US 2014/198388 A1 offenbart eine Fabry-Pérot-Vorrichtung mit einem beweglichen Spiegel.

Das Dokument US 7 844 145 B1 offenbart ein MEMS-basiertes Mehrfach-Kanal-Fabry-Pérot-Interferometer-System mit erweitertem Tuning-Bereich und Auflösung.

Das Dokument US 6 424 466 B1 offenbart ein Zwei-Kavitäten Fabry-Pérot-Filter, welches durch MEMS beweglich ist.

Das Dokument US 2010/097613 A1 offenbart ein Spektrometer und ein Verfahren zur Steuerung des Spektrometers.

### Offenbarung der Erfindung

Vor diesem Hintergrund werden mit dem hier vorgestellten Ansatz ein Interferometerelement, ein Interferometer, ein Verfahren sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Ansatz schafft ein Interferometerelement gemäß Anspruch 1 zur Verwendung in einem Interferometer.

Unter einem Spiegelelement kann ein optisches Element verstanden werden, welches das Licht teilweise reflektiert. Hierbei können die drei Spiegelelemente derart angeordnet werden, dass ein Abstand zwischen zumindest zwei der Spiegelelemente verändert werden kann. Unter einem Lichtpfad kann ein Weg oder ein Pfad verstanden werden, den das Licht durch das Interferometerelement nimmt. Insbesondere kann das Licht hierbei verschiedene optische Komponenten wie beispielsweise die Spiegelelemente passieren oder an diesen Elementen reflektiert werden.

Der hier vorgeschlagene Ansatz basiert auf der Erkenntnis, dass durch die Verwendung von zumindest drei Spiegelelementen zwei Fabry-Pérot- Filter ausgebildet werden können, die speziell zu einer Vergrößerung des Wellenlängenmessbereichs und der Robustheit einer Auswertung von Licht aus dem Lichtpfad gegenüber Umgebungslichteinflüssen genutzt werden kann, insbesondere im Zusammenhang mit einer Verwendung von nicht-modulierbaren Lichtquellen.

Von Vorteil ist es ferner, wenn gemäß einer Ausführungsform des hier vorgestellten Ansatzes das Interferometerelement zumindest ein viertes Spiegelelement aufweist, welches in Bezug zum ersten, zweiten und dritten Spiegelelement seriell im Lichtpfad angeordnet ist und wobei ein dritter Abstand zwischen dem dritten und vierten Spiegelelement veränderbar ist. Eine solche Ausführungsform des hier vorgeschlagenen Ansatzes bietet den Vorteil, durch vier Spiegelelemente zwei voneinander unabhängige Fabry-Pérot-Filter zu schaffen, bei denen ein Abstand zwischen zwei Spiegelelementen je eines der Fabry-Pérot-Filter separat und unabhängig von dem Abstand der zwei Spiegelelemente des anderen Fabry-Pérot-Filters verändert werden kann. Auf diese Weise lässt sich sehr flexibel das Transmissionsverhalten des Interferometerelements einstellen.

Von Vorteil ist eine Ausführungsform des hier vorgeschlagenen Ansatzes, bei der sich ein Material des ersten Spiegelelementes in Bezug zu einem Material des zweiten Spiegelelements und/oder das Material des zweiten Spiegelelementes in Bezug zu einem Material des dritten Spiegelelements unterscheidet, insbesondere sodass die gebildeten Spiegel über unterschiedliche Dispersionen des Phasensprungs bei der Reflexion verfügen. Eine solche Ausführungsform des hier vorgeschlagenen Ansatzes ermöglicht einen sehr großen (spektralen) Messbereich eines durch das Interferometer verlaufenden Lichts, in welchem beispielsweise Lichtfrequenzen bestimmter Ordnungen unterdrückt werden.

Gemäß einer weiteren Ausführungsform des hier vorgeschlagenen Ansatzes ist das Material des ersten, zweiten, dritten und/oder einen vierten Spiegelelement ein metallisches oder metallhaltiges Material. Alternativ oder zusätzlich können sich die Materialien des ersten, zweiten, dritten und/oder vierten Spiegelelements in ihrem Brechungsindex unterscheiden. Eine solche Ausführungsform des hier vorgeschlagenen Ansatzes bietet den Vorteil einer Unterstützung einer wellenlängenabhängigen Phasenverschiebung, sodass ein größerer Veränderungsbereich des ersten und/oder zweiten Abstands vorteilhaft erreicht werden kann.

Auch ist erfindungsgemäß eine Ansteuereinheit zur elektrischen Ansteuerung eines Veränderns des ersten und zweiten Abstands vorgesehen. Insbesondere kann hierbei die Ansteuereinheit ausgebildet und eingerichtet sein, um ein Verändern des ersten und zweiten Abstands zyklisch zu wiederholen. Eine solche Ausführungsform des hier vorgeschlagenen Ansatzes bietet den Vorteil, dass eine Transmission von Licht durch den gesamten Lichtpfad durch eine sehr einfache Einstellung von Positionen der Spiegelelemente und somit des ersten und zweiten Abstandes ein "Shutter"-Betrieb ermöglicht wird, sodass eine Lichtintensität bei den zu messenden Wellenlängen moduliert werden kann, auch wenn eine nicht-modulierbare Lichtquelle verwendet wird. Hierdurch werden Signalkorrelationsverfahren wie Lock-In in der Detektion des Lichts ermöglicht, was eine Verbesserung des Signal-zu-Rausch-Verhältnisses zur Folge hat.

Technisch sehr einfach und kostengünstig umzusetzen ist eine Ausführungsform des hier vorgeschlagenen Ansatzes, bei dem die Ansteuereinheit ausgebildet und eingerichtet ist, um den ersten und/oder zweiten Abstand piezoelektrisch und/oder magnetisch zu verändern. Eine solche Ausführungsform bietet den Vorteil, einen größeren Messbereich mit den gleichen auftretenden Frequenzordnungen im Licht durchfahren zu können und hierdurch ein Umschalten auf andere Ordnungen zu vermeiden. Durch ein solches umschalten würden zusätzliche Fehler bei der Transmission von Licht durch das Fabry-Pérot-Interferometer (basierend auf Toleranzen) entstehen und eine zusätzliche Einschwingzeit zu berücksichtigen sein.

Günstig ist ferner eine Ausführungsform des hier vorgeschlagenen Ansatzes, bei dem die Ansteuereinheit ausgebildet und eingerichtet ist, um den ersten und/oder zweiten Abstand ansprechend auf ein eingelesenes Abstandssignal zu verändern, wobei das Abstandssignal einen aktuellen ersten und/oder zweiten Abstand repräsentiert. Insbesondere kann die Ansteuereinheit ausgebildet sein, um durch das Verändern eine maximale Transmission von Licht durch das Interferometerelement einzustellen. Auf diese Weise kann vorteilhaft sichergestellt werden, dass der erste und/oder zweite Abstand entsprechend einem optischen Detektorsignal nachgeregelt werden kann, sodass Licht durch das Interferometerelement mit hoher Lichtintensität detektiert werden kann, aus dem ein Signal, mit ausreichender bzw. hoher Signalgüte erhalten werden kann. Hierdurch lässt sich wiederum eine Auswertung dieses Signals einfach gestalten.

Technisch sehr einfach ausgestaltet ist die erfindungsgemäße Ausführungsform des hier vorgeschlagenen Ansatzes, bei der die Ansteuereinheit ausgebildet und eingerichtet ist, um mit einer gemeinsamen zum Verändern des ersten und zweiten Abstands den ersten Abstand um einen anderen Abstandswert als den zweiten Abstand zu verändern. Hierdurch kann ein numerischer und/oder schaltungstechnischer Aufwand zur Ausgabe von unterschiedlichen Ansteuersignalen zur Veränderung des ersten und/oder zweiten Abstands vermieden werden.

Von Vorteil ist weiterhin eine Ausführungsform des hier vorgeschlagenen Ansatzes, bei der sich eine Federspannung und/oder eine Federelastizität des ersten, zweiten und/oder dritten Spiegelelementes des Fabry-Pérot-Filterelements unterscheidet. Eine solche Ausführungsform bietet den Vorteil, dass eine solche Federspannung und/oder Federelastizität der einzelnen Spiegelelemente in einem Herstellungsprozess technisch sehr einfach umgesetzt werden kann, sodass eine ebenfalls technisch sehr einfach umzusetzende Ansteuerung der Veränderung des Abstandes in einer entsprechenden Ansteuereinheit implementiert werden kann.

Günstig ist weiterhin eine Ausführungsform des hier vorgeschlagenen Ansatzes, bei der das Fabry-Pérot-Filterelement derart ausgestaltet ist, dass ein unter Verwendung des Interferometerelementes zu untersuchendes Objekt zwischen das erste und zweite Spiegelelement und/oder zwischen das zweite und dritte Spiegelelement zu positionieren ist. Eine solche Ausführungsform bietet den Vorteil, das Fabry-Pérot-Filterelement in mehrere Komponenten aufteilen zu können, sodass beispielsweise einzufügen stehender Bauraum zur Anordnung von Elementen eines Interferometers effizient genutzt werden kann.

Auch kann gemäß einer anderen Ausführungsform des hier vorgeschlagenen Ansatzes ein Spektralfilterelement zum Dämpfen und/oder Blockieren einer Transmission von Licht eines vorbestimmten Wellenlängenbereichs durch das Interferometerelement vorgesehen sein. Eine solche Ausführungsform bietet den Vorteil, Licht mit für die Auswertung und gewünschten Wellenlängenbereichen effizient ausblenden zu können.

Die Vorteile von hier vorgestellten Ausführungsformen des vorgeschlagenen Ansatzes lassen sich auch in einem Spektrometer realisieren, das ferner eine Lichtquelle zum Bereitstellen des Lichstrahls durch das Interferometerelement und einen Detektor zum Erfassen eines aus dem Spektrometer austretenden Auswertelichts aufweist.

Besonders günstig ist eine Ausführungsform des hier vorgeschlagenen Ansatzes, bei dem der Detektor eine Mehrzahl von für Licht unterschiedlicher Wellenlängenbereiche ausgebildete Detektorelemente aufweist und/oder bei dem die Lichtquelle zur nicht-modulierbaren Ausgabe von Licht ausgestaltet ist. Eine solche Ausführungsform bietet den Vorteil einer Vergrößerung des vom Detektor erfassbaren Lichts in Bezug auf einen Wellenlängenmessbereich als auch die Verwendung einer technisch sehr einfach und somit kostengünstig ausgestalteten Lichtquelle zum Betrieb eines solchen Interferometers.

Der hier vorgestellte Ansatz schafft ferner ein Verfahren zum Betreiben einer Ausführungsform des hier vorgestellten Interferometers, wobei das Verfahren die Merkmale des Anspruchs 13 aufweist.

Vorteilhafterweise kann auch in einem optionalen Schritt ein Ausgeben von Licht aus der Lichtquelle entlang des Lichtpfads durch das Interferometerelement erfolgen.

Auch durch eine solche Ausführungsform in der Form eines Verfahrens lassen sich die hier beschriebenen Vorteile effizient und technisch einfach realisieren.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrundeliegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Ansicht eines Interferometers gemäß einem Ausführungsbeispiel der vorliegenden Erfindung mit drei Spiegelelementen;
Fig. 2 Diagramme, die ein Simulationsergebnis für einen beispielhaften Betrieb des Fabry-Pérot-Filterelementes darstellen;
Fig. 3 Diagramme entsprechend der Darstellung aus der Fig. 2, wobei nun ein Ausführungsbeispiel wiedergegeben ist, bei der die Oberflächenbeschaffenheit des dritten Spiegelelementes mit Erhöhungen/Defekten versehen ist;
Fig. 4 Diagramme entsprechend der Darstellung aus der Fig. 2 oder der Fig. 3 gemäß einem weiteren Ausführungsbeispiel für ein Simulationsergebnis eines weiteren Ausführungsbeispiels der vorliegenden Erfindung;
Fig. 5 eine schematische Darstellung eines Interferometers mit einem weiteren Ausführungsbeispiel eines Interferometerelementes;
Fig. 6 eine schematische Darstellung eines Interferometers mit einem weiteren Ausführungsbeispiel eines Interferometerelementes;
Fig. 7 eine schematische Darstellung eines Interferometers mit einem weiteren Ausführungsbeispiel eines Interferometerelementes
Fig. 8 Diagramme entsprechend der Darstellung aus der Fig. 2 oder der Fig. 3 für ein Simulationsergebnis eines weiteren Ausführungsbeispiels der vorliegenden Erfindung;
Fig. 9 ein Ablaufdiagramm eines Verfahrens gemäß einem Ausführungsbeispiel;

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

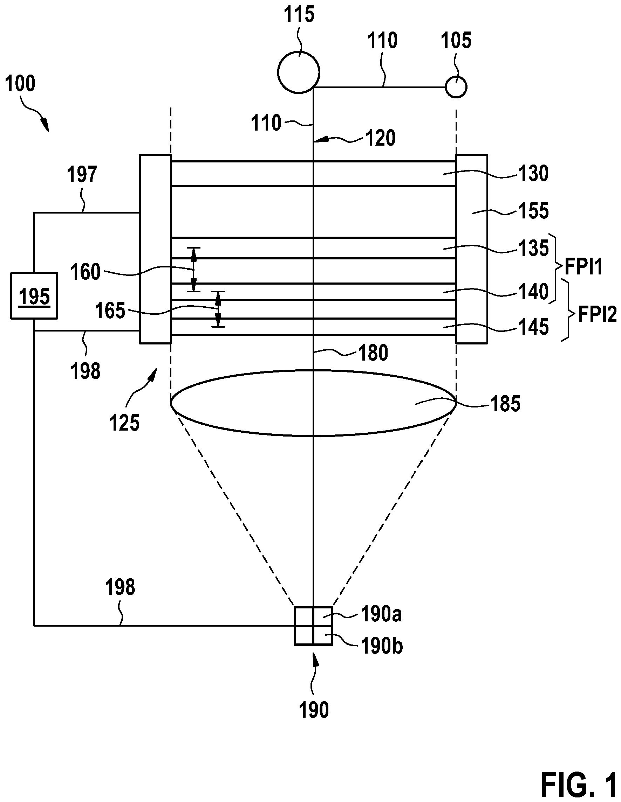

Fig. 1 zeigt eine schematische Ansicht eines Interferometers 100 gemäß einem Ausführungsbeispiel der vorliegenden Erfindung mit drei Spiegelelementen. Das Spektrometer 100 umfasst beispielsweise eine Lichtquelle 105, die beispielsweise als Glühbirne, Leuchtdiode oder Laserdiode zur Ausstrahlung von Licht 110 einer vorbestimmten Wellenlänge oder eines vorbestimmten Wellenlängenbereichs ausgebildet ist, um ein Objekt 115 zu beleuchten. Von dem Objekt 115 wird das Licht 110 reflektiert und entlang eines Lichtpfads 120 durch ein Interferometerelement 125 geführt. Entlang dieses Lichtpfads 120 durchstrahlt das Licht 110 zunächst ein Spektralfilterelement 130, welches beispielsweise durch einen Bandpassfilter zur Dämpfung und/oder Unterdrückung von vorbestimmten Wellenlängenbereichen des Lichts 110 gebildet ist. Hieran anschließend durchstrahlt das Licht 110 ein erstes Spiegelelement 135, ein zweites Spiegelelement 140 sowie ein drittes Spiegelelement 145, welche seriell in Bezug auf den Lichtpfad 120 angeordnet sind. Das erste Spielelement 135, das zweite Spiegelelement 140 und das dritte Spiegelelement 145 sind hierbei über einen (ersten) mikromechanischen Aktuator 155 miteinander gekoppelt, um einen ersten Abstand 160 zwischen dem ersten Spiegelelement 135 und dem zweiten Spiegelelement 140 zu verändern.

Zusätzlich wird durch den ersten mikromechanischen Aktuator 155 und/oder durch einen in der Fig. 1 aus Gründen der Übersichtlichkeit nicht dargestellten zweiten mikromechanischen Aktuator auch noch ein zweiter Abstand 165 zwischen dem zweiten Spiegelelement 140 und dem dritten Spiegelelement 145 verändert. Tritt nun das Licht 110 entlang des Lichtpfads 120 aus dem Interferometerelement 125 hinaus, kann es als Ausgangslicht 180 durch ein Strahlformungselement 185 wie beispielsweise eine Linse auf eine Detektoreinheit 190 auftreffen. Die Detektoreinheit 190 kann hierbei beispielsweise als Detektor-Array mit ersten Teildetektoren 190a zur Messung von ersten Wellenlängenbereichen des Ausgangslichts 180 und zweiten Teildetektoren 190b zur Messung von zweiten Wellenlängenbereichen des Ausgangslichts 180 ausgestaltet sein. Beispielsweise können die ersten Teildetektoren 190a auf einer Basis von Silizium implementiert sein, wobei die zweiten Teildetektoren 190b auf der Basis eines InGaAs-Materials hergestellt wurden.

Um nun möglichst effizient eine Modulation des Lichts 110 entlang des Lichtpfads 120 vornehmen zu können, kann eine Ansteuereinheit 195 vorgesehen sein, die eine Variation des ersten Abstands 160 und des zweiten Abstands 165 durch eine entsprechende elektrische Ansteuerung einer oder beider mikromechanischen Aktuatoren 155, der beispielsweise als Teil der Ansteuereinheit 195 verstanden werden kann, mittels eines Ansteuersignals 197 vornimmt. Hierbei kann beispielsweise auch ein Detektorsignal 198 von der Ansteuereinheit 190 eingelesen werden, um hierdurch das tatsächliche aktuelle Transmissionsverhalten des Interferometerelementes 125 erfassen zu können und entsprechend den ersten Abstand 160 und/oder den zweiten Abstand 165 über den ersten mikromechanischen Aktor 155 oder den nicht dargestellten zweiten mikromechanischen Aktor einstellen zu können. Denkbar ist auch, dass das Detektorsignal eine Information über einen aktuell anliegenden ersten Abstand 160 und/oder zweiten Abstand 165 enthält, sodass auch hier eine Rückmeldung über die möglicherweise erforderliche Veränderung an die Ansteuereinheit 195 gegeben werden kann, um ein möglichst optimales Transmissionsverhalten des Interferometerelementes 125 zu realisieren.

In der Fig. 1 ist somit ein prinzipieller Aufbau eines Fabry-Pérot-Interferometers (FPI)-Verbunds als Spektrometer 100 mit zwei seriell geschalteten FPIs aufgeführt. Die Resonatorkavität (Kavität) eines ersten Fabry-Pérot-Interferometers FPI1 (als erstes Fabry-Pérot-Filter FPI1) wird zwischen dem ersten Spiegelelement 135 und dem zweiten Spiegelelement 140 gebildet. Die Resonatorkavität (Kavität) eines zweiten Fabry-Pérot-Interferometers (als zweites Fabry-Pérot-Filter FPI2) wird dem zwischen zweiten Spiegelelement 140 und dem dritten Spiegelelement 145 gebildet. Die Abstände 160 und 165 der beiden Resonatoren müssen in einem bestimmten Verhältnis zueinander stehen um eine möglichst günstige Gesamttransmission des Fabry-Pérot-Filterelements 125 zu erhalten. Je nachdem welche Wellenlängenordnung in der jeweiligen Kavität betrieben wird, sollten die Abstände 160 und 165 individuell eingestellt werden.

Eine nachgeschaltete Linse als Beispiel eines Strahlformungselements 185 konzentriert die Lichtintensität des Ausgangslichts 180 auf die aktiven Detektorflächen des Detektors 190. Die begrenzte Ausdehnung des Detektors 190 führt gleichzeitig zu einer Beschränkung des Eingangswinkelintervalls vom Fabry-Pérot-Interferometer, da die Lichtstrahlen 110 bzw. 180 den aktiven Bereich des Detektors 190 in der Grenzlage nicht mehr treffen. Dadurch wird die spektrale Auflösung des Interferometerelementes 125 bei Einfall nicht kollimierten Lichts erhöht.

Eine Integration des Aufbaus des Fabry-Pérot-Filterelementes 125 in ein mikromechanisches, genauer mikroelektromechanisches System (MEMS) ist vorteilhaft, sodass die Baugrößenvorteile ausgespielt werden können und die einzelnen Spiegelelemente unter den gleichen Temperaturbedingungen arbeiten. Ein zusätzlicher Hoch- oder Bandpass als Spektralfilterelement 130 kann den Messbereich einschränken, sodass sichergestellt ist, dass die nicht zu messenden Ordnungen des Gesamttransmissionsverhaltens unterdrückt werden.

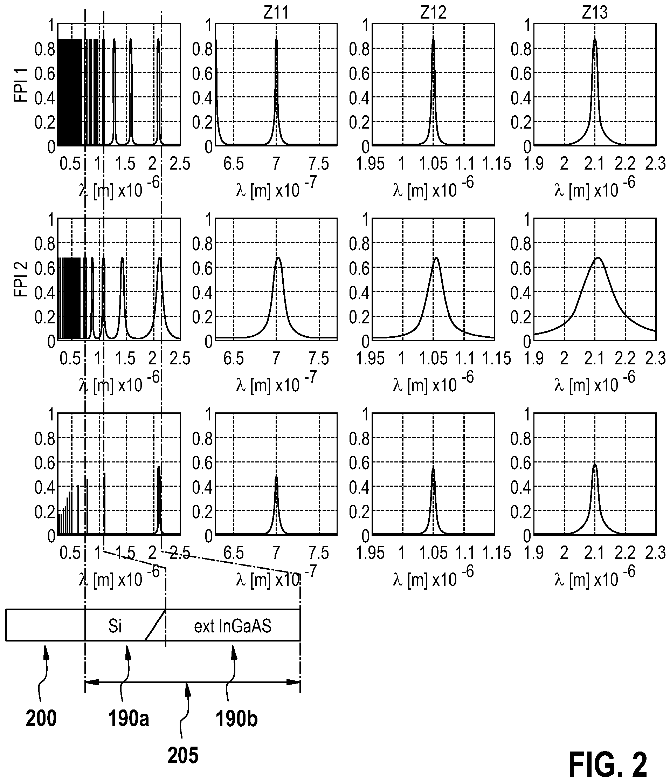

Fig. 2 zeigt Diagramme, die ein Simulationsergebnis für einen beispielhaften Betrieb des Fabry-Pérot-Filterelementes 125 aus der Fig. 1 als Übertragungsfunktion (hier als Transmissionsverhalten) zwischen den normierten Werten 0 und 1 über die Wellenlänge λ darstellen. Im linken Diagramm in jeder Zeile ist eine Übersicht des Transmissionsverhaltens über einen größeren Wellenlängenbereich λ aufgetragen, wobei in den rechten drei Diagrammen jeder Zeile jeweils das Transmissionsverhalten im Bereich einer der Resonanzfrequenzen dargestellt ist. Ein erster Wellenlängenbereich 200 wird hierbei durch das Spektralfilterelement 130 geblockt, wogegen in einem zweiten Wellenlängenbereich 205 der Detektor 190 empfindlich ist und in einem ersten Teilspektralbereich ein Teildetektor 190a, beispielsweise auf einer Siliziumbasis, empfindlich ist, wogegen in einem zweiten Teilspektralbereich der Teildetektor 190b, beispielsweise auf InGaAs-Basis, empfindlich ist. Fig. 2 zeigt hierbei die Funktionsweise des FPI-Verbundes als Fabry-Pérot-Filterelement 125 bei einer definierten Wellenlänge von beispielhaften 2100 nm, wobei die Kavitätslängen, d. h., die Abstände 160 bzw. 165 zwischen den Spiegelelementen, mit unterschiedlichen Wellenlängenordnungen betrieben werden, damit eine Unterdrückung der ungewollten Resonatorwellenlängen des ersten Fabry-Pérot-Filters FPI1 und des zweiten Fabry-Pérot-Filters FPI2 erfolgen kann.

In der oberen Zeile der Diagramme aus Fig. 2 ist eine Übertragungsfunktion eines ersten Fabry-Pérot-Filters (FPI1), der das erste Spiegelelement 135 und das zweite Spiegelelement 140 umfasst, darstellt, wogegen in der mittleren Zeile der Diagramme aus der Fig. 2 eine Übertragungsfunktion eines zweiten Fabry-Pérot-Filters (FPI2) dargestellt ist, der das zweite Spiegelelement 140 und das dritte Spiegelelement 145 umfasst. In der unteren Zeile der Diagramme aus der Fig. 2 ist eine Übertragungsfunktion der Kombination aus dem ersten und zweiten Fabry-Pérot-Filter dargestellt. Das erste Fabry-Pérot-Filter FPI1 wird bei einer ersten Resonanzwellenlänge von 2100 nm in einer vorteilhaften Wellenlängenordnung 3 betrieben, um eine möglichst geringe spektrale Halbwertsbreite (engl. full width at half maximum, FWHM) zu erreichen. Im InGaAs-Detektormessbereich von ca. 1050 .... 2100nm sind die Ordnungen 4 und 5 integriert, die zu einem Fehlsignal führen könnten. Im Si-Detektormessbereich von ca.700nm ... 1050nm sind ebenfalls die Ordnungen 7 und 8 integriert. Mit Hilfe des zweiten Fabry-Pérot-Filter FPI2 können die oben aufgeführten FPI1-Ordnungen 4, 5, 7, 8 usw. in der Gesamttransmission eliminiert werden, wenn das zweite Fabry-Pérot-Filter FPI2 bei 2100 nm z. B. in der Ordnung 2 betrieben wird.

Die Ordnungen 3, 6, 9 des ersten Fabry-Pérot-Filters FPI1 usw. würden nicht blockiert werden, sodass eine Messung der Lichtintensitäten möglich ist. Für jede messbare Ordnung sollte nur ein Detektor 190 das Messsignal auswerten.

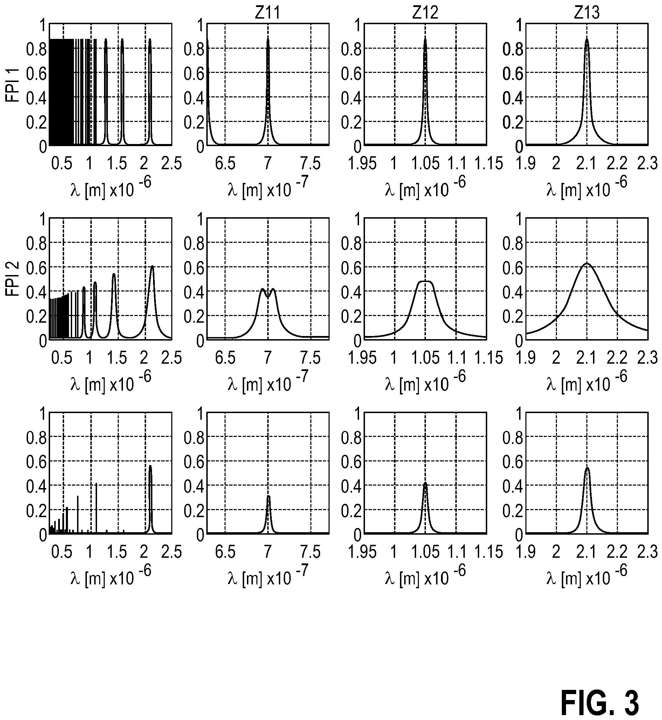

Fig. 3 zeigt Diagramme entsprechend der Darstellung aus der Fig. 2, wobei nun eine Ausführungsform wiedergegeben ist, bei der die Oberflächenbeschaffenheit des dritten Spiegelelementes 145 mit Erhöhungen / Defekten, zum Beispiel mit einer Höhe von ca. 20 nm, versehen ist, sodass das Gesamtsystem sehr fehlertolerant bezüglich relativer Positionsfehler zwischen dem ersten Fabry-Pérot-Filter FPI1 und dem zweiten Fabry-Pérot-Filter FPI2 ist.

Aus den Figuren 2 und 3 ist ferner erkennbar, dass im ersten Fabry-Pérot-Filter FPI1 die Ordnung 3 im (externen) InGaAs-Detektor oder im InGaAs-Detektor in einem reduzierten Messbereich erkennbar ist (Zoom Z13 in Fig. 2 und 3). Ferner ist aus den Figuren 2 und 3 erkennbar, dass im ersten Fabry-Pérot-Filter FPI1 die Ordnung 6 im Si-Detektor erkennbar ist (Zoom Z12 in Fig. 2 und 3). Ein Hochpass bei ca. 700 nm würde die höheren Wellenlängenordnungen blockieren (Ordnung 9 usw.).

Durch Variation der Spiegelabstände kann somit in diesem Beispiel mit der FPI1 Ordnung 3 der Wellenlängenbereich von ca. 1050 nm bis 2100 nm und mit der FPI1 Ordnung 6 gleichzeitig der Wellenlängenbereich von ca. 700 nm bis 1050 nm gemessen werden. Durch die Verwendung höherer Ordnungen (3 und 6) ist dabei die Auflösung verbessert.

Um eine reproduzierbare Gesamttransmission zu erhalten, sollten die Lichtintensitätsfehler (welche durch eine Ungenauigkeit der Positionierung der beiden Resonatorlängen relativ zueinander entstehen können) minimiert werden. Dabei können unterschiedliche Technologien verwendet werden. Fig. 3 zeigt die Auswirkungen zweier dieser Technologien, die zu einer Verbreiterung des FWHM führen (Beispielhaft erkennbar am dritten Spiegelelement 145). Eine Reduzierung der Reflektivität führt weiterhin zu einer Verbreiterung des FWHMs und damit zu einer gewissen relativen Positionsunempfindlichkeit. Eine Verbreiterung des FWHM kann auch durch abweichen der Oberflächenform oder Oberflächenrauigkeit z. B. durch zusätzliche Erhöhungen auf dem dritten Spiegelelement 145 entstehen. Die unterschiedlichen Resonatorlängen beim zweiten Fabry-Pérot-Filter FPI2 sind vorteilhaft als positionsunabhängige Rechteckverteilung auszuführen, um die Anforderungen bzgl. der Positioniergenauigkeit von FPI2 zu verringern.

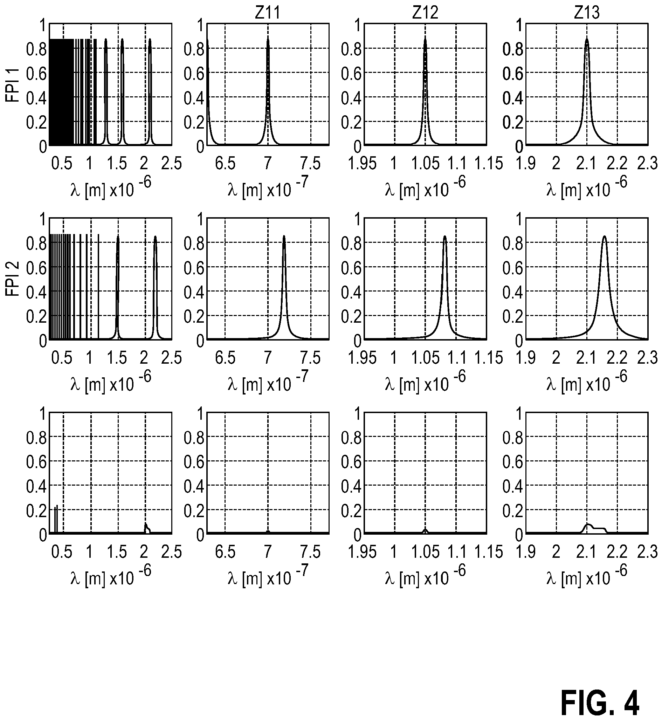

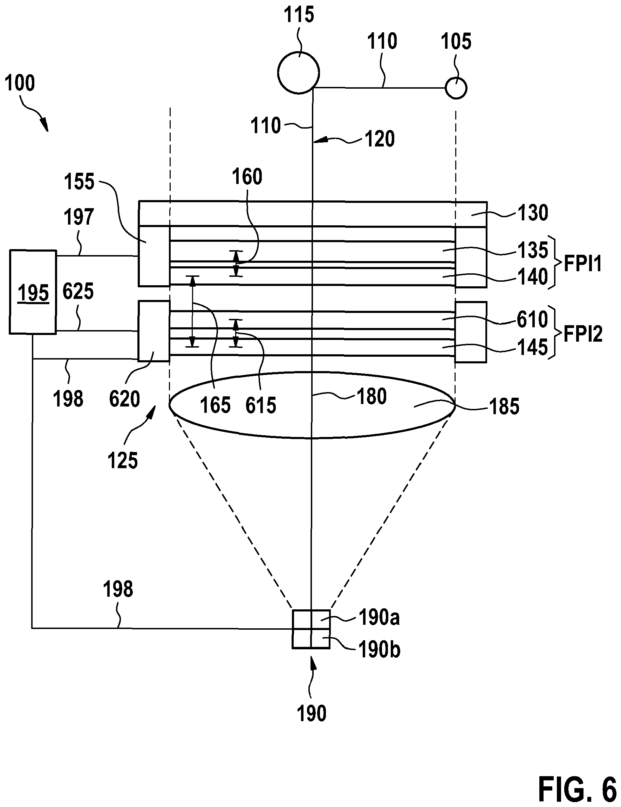

Fig. 4 zeigt Diagramme entsprechend der Darstellung aus der Fig. 2 oder der Fig. 3. Hierbei ist in den Diagrammen der Fig. 4 die Auswirkung einer Positionierung des zweiten Fabry-Pérot-Filters FPI2 um ca. 60 nm simuliert worden, wobei die resultierende Lichtintensität erheblich reduziert wird. Eine Modulation des zweiten Abstandes 165 z.B. von ± 60 nm wird ebenfalls zu einer Intensitätsmodulation führen. Diese Abhängigkeit könnte genutzt werden, um eine Positionsregelung basierend auf dem optischen Signal aufzubauen, sodass eine maximale Transmission in Abhängigkeit der Position bzw. des ersten Abstands 160 im ersten Fabry-Pérot-Filter FPI1 sichergestellt wird. Diese Positionsregelung könnte in der Ansteuereinheit 195 z.B. gemäß Fig 6 untergebracht werden.

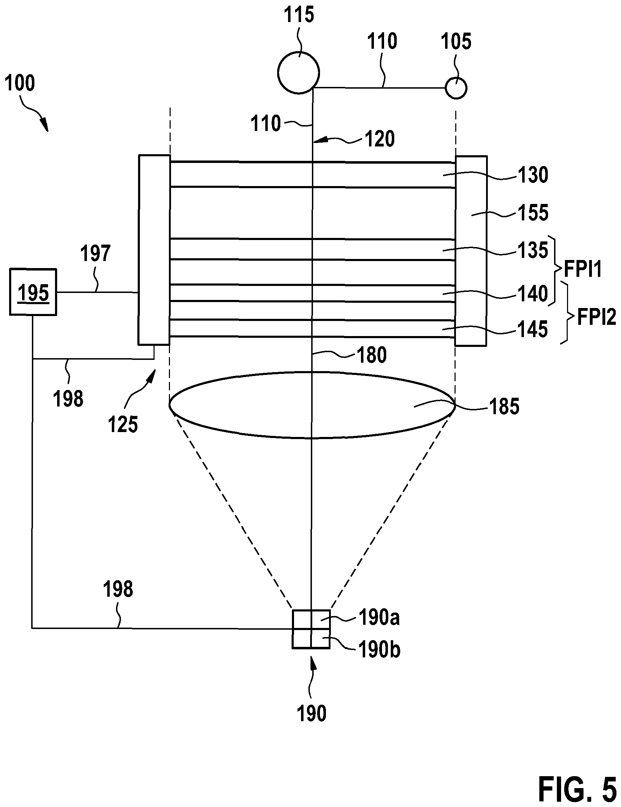

Fig. 5 zeigt eine schematische Darstellung eines Interferometers 100 mit einem weiteren Ausführungsbeispiel eines Interferometerelementes 125. In diesem Ausführungsbeispiel ist eine Möglichkeit einer vereinfachten Ansteuerung der beiden Fabry-Pérot-Filter FPI1 und FPI2 durch die Ansteuereinheit 195 dargestellt. Dabei werden die Aktuatoren 155 beider Fabry-Pérot-Filter FPI1 und FPI2 mit der gleichen bzw. ähnlichen Aktuatorspannung und/oder -strom versorgt. Die entsprechenden Steifigkeiten oder Elastizitäten der Spiegelelemente und -aktuatoren, als des ersten Spiegelelementes 135, des zweiten Spiegelelementes 140 und/oder des dritten Spiegelelementes 145, sollten so ausgelegt werden, dass die geforderten Positionen durch die gemeinsam an den Aktor 155 oder die Aktoren 155 für die Veränderung des ersten 160 und zweiten 165 Abstandes angelegte Spannung/den gemeinsam angelegten Strom eingestellt wird. Fig. 5 zeigt somit ein Ausführungsbeispiel, bei dem die Federkonstanten der jeweiligen Spiegelaufhängungen aufeinander abgestimmt sind, sodass nur mit dem Anlegen einer einzigen Steuerspannung die korrekte Funktion bzw. der Betrieb des Interferometerelementes 125 gewährleistet ist.

Fig. 6 zeigt eine schematische Darstellung eines Interferometers 100 mit einem weiteren Ausführungsbeispiel eines Interferometerelementes 125. In Fig. 6 wird ein vorteilhaftes Ausführungsbeispiel beschrieben, der aus einer Serienschaltung von zwei separaten Fabry-Pérot-Filtern FPI1 und FPI2 beschrieben, die beispielsweise über ein Bondverfahren entweder direkt oder über einen separaten Träger zueinander positioniert werden. Das erste Fabry-Pérot-Filter FPI1 enthält hierbei das erste 135 und zweite 140 Spiegelelement, wogegen das zweite Fabry-Pérot-Filter FPI2 das dritte 145 und ein viertes Spiegelelement 610 enthält, die in einem veränderbaren dritten Abstand 160 voneinander beabstandet angeordnet sind. Im Wesentlichen ist somit eine Entkopplung des zweiten Fabry-Pérot-Filters FPI2 von dem zweiten Spiegelelement 140 möglich geworden. Beispielsweise kann das vierte Spiegelelement 610 zwischen dem zweiten 140 und dem dritten Spiegelelement 145 seriell im Lichtpfad angeordnet sein. Das Verändern des zweiten Abstands 165 und/oder des dritten Abstands 615 erfolgt mittels eines zweiten mikromechanischen, speziell mikroelektromechanischen (MEMS) Aktors 620, der beispielsweise mittels eines entsprechenden (weiteren) Ansteuersignals 625 angesteuert wird. Die Verwendung von baugleichen Fabry-Pérot-Filtern FPI1 und FPI2, die mit separaten Aktoren 155 bzw. 620 und mit unterschiedlichen Ordnungen und damit Abständen 160, 165 bzw. 615 betrieben werden, kann zu einer Vereinfachung des Fertigungsaufwandes zur Herstellung eines solchen Interferometerelementes 125 führen. Fig. 6 zeigt somit ein Ausführungsbeispiel, bei dem zwei als MEMS-Bauteile ausgestaltete Aktoren 155 und 620 verwendet werden, die jeweils den Abstand 160 bzw. 615 zweier Spiegelelemente verändern können.

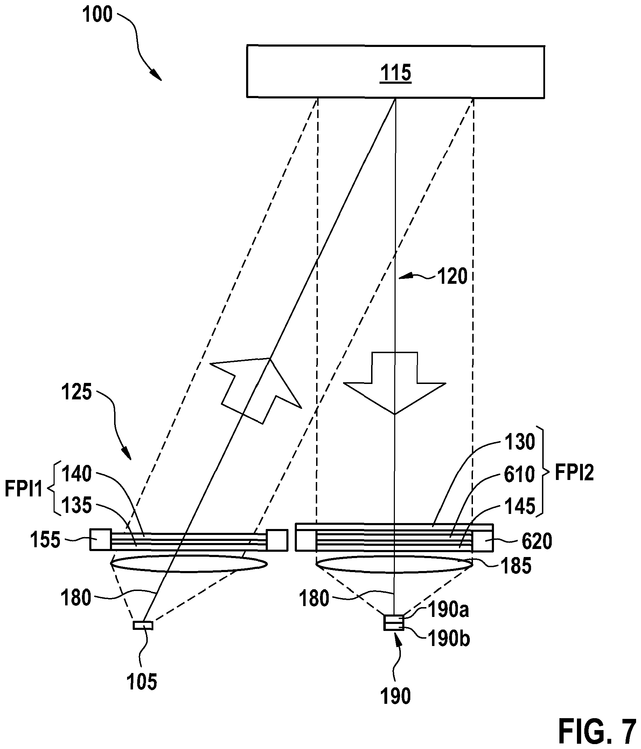

Fig. 7 zeigt eine schematische Darstellung eines Interferometers 100 mit einem weiteren Ausführungsbeispiel eines Interferometerelementes 125. Dieses Interferometerelement 125 hat eine veränderte Aufteilung der beiden Fabry-Pérot-Filter FPI1 und FPI2 im Lichtpfad 120. Hier ist das Objekt 115 (als Target) im Lichtpfad 120 zwischen dem zweiten Spiegelelement 140 und dem dritten 145 bzw. vierten 610 Spiegelelelement angeordnet. Fig. 7 zeigt somit ein Ausführungsbeispiel, bei dem ein Fabry-Pérot-Filter FPI1 (dessen Spiegelabstand von einem ersten mikromechanischen Aktor 155 verändert wird) vor der Lichtquelle 105 und ein zweites Fabry-Pérot-Filter FPI2 (dessen Spiegelabstand von einem zweiten mikromechanischen Aktor 620 verändert wird) vor dem Detektor 190 positioniert wird.

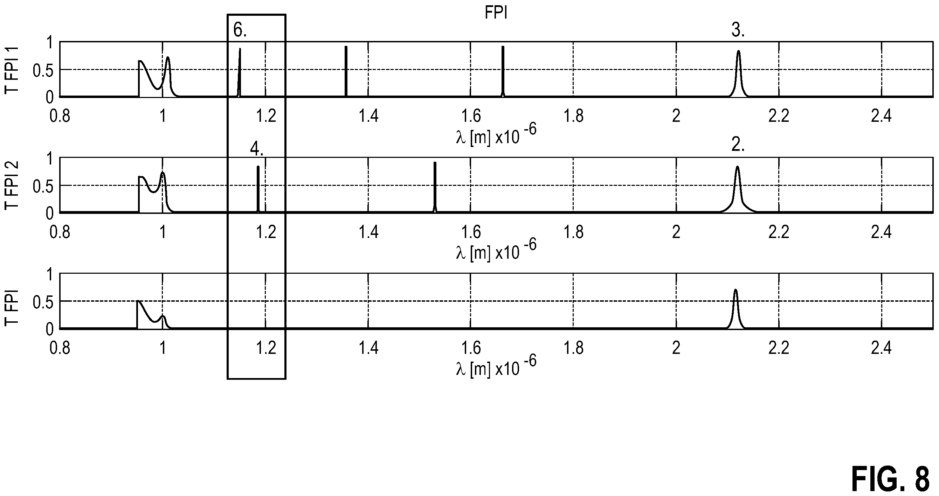

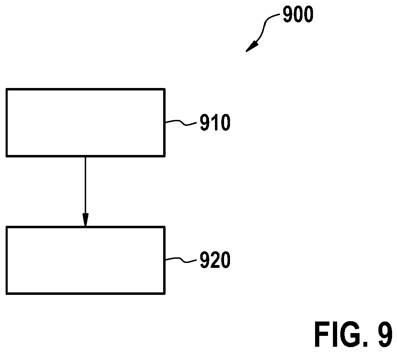

Fig. 8 zeigt Diagramme entsprechend der Darstellung aus der Fig. 2 oder der Fig. 3, in denen nun ein spektrales Verhalten von zwei hintereinandergeschalteten FPIs mit einer Phasenverschiebungsdispersion dargestellt sind. Im Bereich des Rechteckes mit Ordnung 6 (FPI1) und Ordnung 4 (FPI2) wurde eine Resonanzwellenlänge erwartet (entsprechend der Darstellung in der Fig. 2). Durch die Phasenverschiebungsdispersion erfahren die benutzten Ordnungen eine unterschiedliche Nichtlinearität bezüglich des Verhaltens zwischen Gapabstand und Wellenlänge, sodass auch diese Resonanzwellenlängen gesperrt werden und zu einem größeren spektralen Messbereich/Detektor führen. Im Vergleich zu diesem Vorteil ist in Fig. 2 eine lineare Abhängigkeit zwischen Gapabstand und Wellenlänge dargestellt, sodass die Ordnungen 3/6/.. (FPI1) und Ordnung 2/4/.. (FPI2) die FPI-Kombination passieren können. Fig. 8 zeigt somit in Diagrammen ein Ausführungsbeispiel, bei dem die Phasenshiftdisperion bei unterschiedlichen Ordnungen und damit Gapabständen zu einer Vergrößerung des Messbereiches führen kann. Im Bereich des Rechteckes mit Ordnung 6 (FPI1) und Ordnung 4 (FPI2) wurde eine Resonanzwellenlänge erwartet, die vergleichbar zu Ordnung 3 (FPI1) und Ordnung 2 (FPI2) die FPI-Kombination passieren kann (geringere FWHM) Fig. 9 zeigt ein Ablaufdiagramm eines Verfahrens 900 zum Betreiben einer Variante eines hier vorgestellten Interferometers 100, wobei das Verfahren 900 einen Schritt 910 des Veränderns des ersten Abstands und des zweiten Abstands aufweist, um ein Ausgangslicht zu erhalten. Schließlich umfasst das Verfahren 900 einen Schritt 920 des Detektierens und/oder Analysierens von aus dem Interferometerelement austretenden Ausgangslicht. Zusammenfassend ist anzumerken, dass in Ausführungsbeispielen des hier vorgestellten Ansatzes ein Aktor 155 des ersten Fabry-Pérot-Filters FPI1 direkt vor der Lichtquelle 105 (z. B. als Emitter-Linsen-Kombination) positioniert ist und das spektrale Verhalten der Lichtquelle 105 zeitlich modulieren kann, indem der erste Abstand 160 zeitlich modifiziert wird. Alternativ oder zusätzlich kann ein zweiter Aktor 620 des zweiten Fabry-Pérot-Filters FPI2 zusammen z. B. mit einem Hochpass bzw. Bandpass als Spektralfilterelement 130 vor dem Detektor 190 / den Detektoren 190a, 190b positioniert werden. In diesem Ausführungsbeispiel wird der Abstand 160 des betreffenden FPls (unterschiedliche Ordnung gegenüber Aktor 155 des ersten Fabry-Pérot-Filters FPI1) statisch gehalten.

Die zeitliche Modulation der Lichtintensität der Lichtquelle 105 einer Wellenlänge kann zu einer verbesserten Unterdrückung des Umgebungslichts und der nachfolgenden Elektronik bzw. einer Auswerteeinheit (die beispielsweise als Teil der Ansteuereinheit 195 ausgebildet ist) führen, wenn die Detektorsignale entsprechend der Modulationsfrequenz gefiltert und ausgewertet werden. Fig. 3 (Maximum) und Fig. 4 (Minimum) zeigen beispielhaft die so erhaltenen spektralen Intensitätswerte.

Durch die Vergrößerung des Messbereiches ist ein Ausführungsbeispiel vorteilhaft, das eine größere Gapabstandsvariation einstellen kann. Dies ist beispielsweise vorteilhaft mit einem elektrostatischen und/oder magnetischen und/oder piezoelektrischen Antrieb als Aktor 155 bzw. 620 und mit beispielsweise einer Detektion des Gapabstandes (kapazitiv, piezoresistiv) möglich.

Ein Ziel des hier vorgestellten Ansatzes kann speziell darin gesehen werden, eine Vergrößerung des Wellenlängenmessbereiches und der Robustheit gegenüber Umgebungslichteinflüssen bei nicht modulierbaren Lichtquellen zu erhalten. Auch kann eine Vergrößerung des Wellenlängenmessbereiches durch Unterdrückung ungewünschter Wellenlängenordnungen einer FPI-Kaverne im kompletten Lichtpfad bei gleichzeitig geringer spektraler Halbwertsbreite sowie hoher Auflösung erhalten werden. Zusätzlich oder alternativ kann eine Verwendung von parallel bzw. seriell angebrachten Detektoren erfolgen, deren spektrale Empfindlichkeit und Transmissionsfähigkeit eine Vergrößerung des Wellenlängenmessbereichs zulässt. Auch wird eine Erhöhung der Robustheit von Ausführungsbeispielen eines hier vorgestellten Interferometerelementes gegenüber Umgebungslichteinflüssen durch Modulation der Transmission des FPI-Lichtpfades, beispielsweise im "Shutter"-Betrieb erreicht.

Um solche Vorteile zu erreichen können Ausführungsformen des hier vorgestellten Ansatzes ein Interferometerelement als Bauelement umfassen, die zur Verwendung in einem Miniaturspektrometer eingesetzt werden können und eine Lichtquelle, ein spektrales Element und einen Photodetektor aufweisen. Günstig ist weiterhin ein Ausführungsbeispiel, bei dem das spektrale Element aus mikromechanischen Fabry-Pérot-Interferometer-Bauelementen mit größer/gleich drei übereinander angeordneten Spiegelelementen aufgebaut ist, die durch verstellbare mindestens zwei Abstände positioniert sind. Ferner kann auch der Photodetektor aus unterschiedlich spektral sensitiven Einzeldetektoren (gegebenenfalls mit vorgeschaltetem/n Filter(n)) bestehen, die geeignet positioniert und in Summe eine Vergrößerung des Wellenlängenmessbereiches zulassen. Auch kann in einem weiteren Ausführungsbeispiel die Transmission des gesamten Lichtpfades durch die Einstellung der beiden Spiegelpositionen in einem "Shutter"-Betrieb beeinflusst werden, sodass die Lichtintensität bei den zu messenden Wellenlängen moduliert werden kann. Vorteilhaft ist weiterhin ein Ausführungsbeispiel des hier vorgestellten Ansatzes mit vorgeschaltetem Filterelement, um den gesamten Messbereich einzuschränken, um ungewollte Wellenlängenbereiche auszuschließen. Auch können in einem Ausführungsbeispiel die notwendigen Spiegelabstände gemessen und die Ansteuereinheit die benötigten Spiegelabstände steuern bzw. regeln und eine Auswertung der Detektorsignale ermöglicht. Gemäß eines anderen Ausführungsbeispiels kann nur der z. B. erste Spiegelabstand gemäß der gewünschten Wellenlänge gemessen werden und die weiteren Spiegelabstände entsprechend dem optischen Detektorsignal nachgeregelt werden, sodass eine maximale Transmission zu jedem Zeitbereich sichergestellt wird. Von Vorteil ist weiterhin ein Ausführungsbeispiel, bei dem die Spiegelelemente piezoelektrisch oder magnetisch angetrieben werden, sodass ein größerer Gap-Verstellbereich, d. h., ein Veränderunsbreich des ersten und zweiten Abstandes im Gegensatz zu einem elektrostatischen Antrieb verwendet werden kann. Somit kann ein größerer Messbereich mit den gleichen Ordnungen durchgefahren werden und ein Umschalten auf andere Ordnungen (z. B. von Ordnung 2/3 auf die Ordnungen 2/5 bzw. 5/3) vermieden werden. Durch das Umschalten entstünden zusätzliche Fehler bei der Transmission des FPI's (basierend auf Toleranzen) und eine zusätzliche Einschwingzeit muss berücksichtigt werden. In einem weiteren Ausführungsbeispiel kann die Materialwahl der Spiegelelemente so gewählt sein, dass durch eine wellenlängenabhängige Phasenverschiebung (Dispersion) ein sehr großer Messbereich entsteht, wobei beispielsweise weitere Ordnungen unterdrückt werden. Durch breitbandige Wahl der Spiegelmaterialien (Metall bzw. BRAGG-Struktur) wird die wellenlängenabhängige Phasenverschiebung unterstützt, sodass ein größerer Gap-Verstellbereich von Vorteil ist. Technisch besonders einfach umsetzbar ist ein Ausführungsbeispiel des hier vorgestellten Ansatzes mit einer FPI-Auslegung, sodass mit nur einer Steuerspannung die notwendige Position von beiden Spiegelabständen angefahren wird (z. B. durch unterschiedliche Auslegung der Federgeometrien der jeweiligen FPI-Spiegelelemente, wenn die FPI-Kavitäten bzw. Abstände mit unterschiedlichen Ordnungen betrieben werden. Insgesamt lässt sich als Vorteil von einem oder mehreren Ausführungsbeispielen nennen, dass eine Vergrößerung des spektralen Messbereiches im Vergleich zu einem Standard-FPI möglich wird. Auch kann eine Vergrößerung des spektralen Messbereiches durch wellenlängenabhängige Phasenverschiebung vergrößert werden. Alternativ oder zusätzlich lässt sich eine bessere spektrale Halbwertsbreite erhalten, da höhere Ordnungen verwendet werden können, bei denen der messbare Wellenlängenbereich bei konventionellem Aufbau sehr klein wäre. Auch führt eine parallele Messung von unterschiedlichen Spektralbereichen (bei der Verwendung von unterschiedlichen Detektoren) zu einer Reduktion der Messzeit. Schließlich besteht ferner die Möglichkeit durch die Modulation der Lichtintensität die Verwendung von nicht modulierbaren Lichtquellen einzusetzen bei gleichzeitiger besserer Rauschunterdrückung des Umgebungslichtes und der nachfolgenden Elektronik.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Interferometerelement (125) zur Verwendung in einem Spektrometer (100), wobei das Interferometerelement (125) folgendes Merkmal aufweist:
- ein mikromechanisches Fabry-Pérot-Filterelement (FPI1, FPI2), das zumindest ein erstes Spiegelelement (135), ein zweites Spiegelelement (140) und ein drittes Spiegelelement (145) aufweist, die seriell einem Lichtpfad (120) des Interferometerelementes (125) angeordnet sind und wobei ein erster Abstand (160) zwischen dem ersten (135) und zweiten (140) Spiegelelement und ein zweiter Abstand (165) zwischen dem zweiten (140) und dritten (145) Spiegelelement veränderbar ist, wobei eine Resonatorkavität eines ersten Fabry-Pérot-Interferometers (FPI1) zwischen dem ersten Spiegelelement (135) und dem zweiten Spiegelelement (140) gebildet wird und eine Resonatorkavität eines zweiten Fabry-Pérot-Interferometers (FPI2) zwischen dem zweiten Spiegelelement (140) und dem dritten Spiegelelement (145) gebildet wird,
- eine Ansteuereinheit (195) zur elektrischen Ansteuerung eines Veränderns des ersten (160) und zweiten (165) Abstands,
**dadurch gekennzeichnet, dass**
die Ansteuereinheit (195) ausgebildet und eingerichtet ist, um mit einer gemeinsam angelegten Spannung und/oder einem gemeinsam angelegten Strom zum Verändern des ersten und zweiten Abstands (160, 165), den ersten Abstand (160) um einen anderen Abstandswert als den zweiten Abstand (165) zu verändern.

2. Interferometerelement (125) gemäß Anspruch 1, bei dem sich ein Material des ersten Spiegelelements (135) in Bezug zu einem Material des zweiten Spiegelelements (140) und/oder das Material des zweiten Spiegelelementes (140) in Bezug zu einem Material des dritten Spiegelelements (145) unterscheidet, insbesondere sodass die gebildeten Spiegel über unterschiedliche Dispersionen des Phasensprungs bei der Reflexion verfügen.

3. Interferometerelement (125) gemäß Anspruch 2, bei dem das Material des ersten (135), zweiten (140) und/oder dritten (145) Spiegelelementes ein metallisches oder metallhaltiges Material ist und/oder sich im Brechungsindex unterscheidet

4. Interferometerelement (125) gemäß einem der vorangegangenen Ansprüche, wobei die Ansteuereinheit (195) ausgebildet und eingerichtet ist, um ein Verändern des ersten (160) und zweiten (165) Abstands zyklisch zu wiederholen.

5. Interferometerelement (125) gemäß Anspruch 4, bei dem die Ansteuereinheit (195) ausgebildet und eingerichtet ist, um den ersten (160) und/oder zweiten (165) Abstand elektrostatisch, piezoelektrisch und/oder magnetisch zu verändern.

6. Interferometerelement (125) gemäß Anspruch 4 oder 5, bei dem die Ansteuereinheit (195) ausgebildet und eingerichtet ist, um den ersten (160) und/oder zweiten (165) Abstand ansprechend auf ein eingelesenes Abstandssignal (198) zu verändern, wobei das Abstandssignal (198) einen aktuellen ersten (160) und/oder zweiten (165) Abstand repräsentiert und/oder wobei die Ansteuereinheit (195) ausgebildet ist, um durch das Verändern eine maximale Transmission von Licht durch das Fabry-Pérot-Filterelement (FPI1, FPI2) einzustellen.

7. Interferometerelement (125) gemäß einem der vorangegangenen Ansprüche, bei dem sich eine Federspannung und/oder eine Federelastizität des ersten (135), zweiten (140) und/oder dritten (145) Spiegelelementes des Fabry-Pérot-Filterelements (FPI1, FPI2) unterscheidet.

8. Interferometerelement (125) gemäß einem der vorangegangenen Ansprüche, bei dem das Fabry-Pérot-Filterelement (FPI1, FPI2) derart ausgestaltet ist, dass ein unter Verwendung des Interferometerelementes (125) zu untersuchendes Objekt (115) zwischen das erste (135) und zweite (140) Spiegelelement und/oder zwischen das zweite (140) und dritte (145) Spiegelelement zu positionieren ist.

9. Interferometerelement (125) gemäß einem der vorangegangenen Ansprüche, mit einem Spektralfilterelement (130) zum Dämpfen und/oder Blockieren einer Transmission von Licht (110) eines vorbestimmten Wellenlängenbereichs durch das Interferometerelement (125).

10. Interferometerelement (125) gemäß einem der vorangegangenen Ansprüche, mit zumindest einem vierten Spiegelelement (610), welches in Bezug zum ersten (135), zweiten (140) und dritten (145) Spiegelelement seriell im Lichtpfad (120) angeordnet ist und wobei ein dritter Abstand (615) zwischen dem dritten (145) und vierten (610) Spiegelelement veränderbar ist.

11. Spektrometer (100) mit einem Interferometerelement (125) gemäß einem der vorangegangenen Ansprüche, einer Lichtquelle (105) zum Bereitstellen des Lichtstrahls (110) durch das Interferometerelement (125) und einem Detektor (190) zum Erfassen eines aus dem Spektrometer (100) austretenden Ausgangslichts (180).

12. Spektrometer (100) gemäß Anspruch 11, bei dem der Detektor (190) eine Mehrzahl von für Licht (110) unterschiedlicher Wellenlängenbereiche ausgebildete Detektorelemente (190a, 190b) aufweist und/oder bei dem die Lichtquelle (105) zur nicht-modulierbaren Ausgabe von Licht (110) ausgestaltet ist.

13. Verfahren (900) zum Betreiben eines Interferometers (100) gemäß Anspruch 11 oder 12, wobei das Verfahren (900) die folgenden Merkmale aufweist:
- Verändern (910) des ersten Abstands (160) und des zweiten Abstands (165), um ein Ausgangslicht (180) zu erhalten; und
- Detektieren (920) und/oder Analysieren von aus dem Interferometerelement (125) austretenden Ausgangslicht (180).

14. Computerprogramm, das dazu eingerichtet ist, das Verfahren (900) gemäß Anspruch 13 auszuführen und/oder anzusteuern.

15. Maschinenlesbares Speichermedium, auf dem das Computerprogramm nach Anspruch 14 gespeichert ist.

## Claims

1. Interferometer element (125) for use in a spectrometer (100), with the interferometer element (125) having the following feature:
- a micromechanical Fabry-Pérot filter element (FPI1, FPI2), which has at least a first mirror element (135), a second mirror element (140), and a third mirror element (145), which are arranged in series in an optical path (120) of the interferometer element (125), and with a first distance (160) between the first (135) and second (140) mirror elements and a second distance (165) between the second (140) and third (145) mirror elements being modifiable, a resonator cavity of a first Fabry-Pérot interferometer (FPI1) being formed between the first mirror element (135) and the second mirror element (140), and a resonator cavity of a second Fabry-Pérot interferometer (FPI2) being formed between the second mirror element (140) and the third mirror element (145),
- a control unit (195) for electrically controlling a modification of the first (160) and second (165) distances,
**characterized in that**
the control unit (195) is embodied and configured to modify, with a jointly applied voltage and/or a jointly applied current for changing the first and second distances (160, 165), the first distance (160) by a distance value other than the second distance (165).

2. Interferometer element (125) according to Claim 1, wherein a material of the first mirror element (135) differs from a material of the second mirror element (140), and/or the material of the second mirror element (140) differs from a material of the third mirror element (145), in particular in a manner such that the mirrors formed have different dispersions of the phase jump during the reflection.

3. Interferometer element (125) according to Claim 2, wherein the material of the first (135), second (140), and/or third (145) mirror elements is a metallic or metal-containing material and/or differs with respect to the refractive index.

4. Interferometer element (125) according to any of the preceding claims, wherein the control unit (195) is embodied and configured to cyclically repeat a modification of the first (160) and second (165) distances.

5. Interferometer element (125) according to Claim 4, wherein the control unit (195) is embodied and configured to modify the first (160) and/or second (165) distance electrostatically, piezoelectrically and/or magnetically.

6. Interferometer element (125) according to Claim 4 or 5, wherein the control unit (195) is embodied and configured to modify the first (160) and/or second (165) distance in response to a read distance signal (198), wherein the distance signal (198) represents a current first (160) and/or a second (165) distance and/or wherein the control unit (195) is embodied to set a maximum transmission of light through the Fabry-Pérot filter element (FPI1, FPI2) by way of the modification.

7. Interferometer element (125) according to any of the preceding claims, wherein spring tensions and/or spring elasticities of the first (135), second (140), and/or third (145) mirror element of the Fabry-Pérot filter element (FPI1, FPI2) differ.

8. Interferometer element (125) according to any of the preceding claims, wherein the Fabry-Pérot filter element (FPI1, FPI2) is designed such that an object (115) that is to be examined using the interferometer element (125) should be positioned between the first (135) and second (140) mirror elements and/or between the second (140) and third (145) mirror elements.

9. Interferometer element (125) according to any of the preceding claims, having a spectral filter element (130) for attenuating and/or blocking a transmission of light (110) of a predetermined wavelength range through the interferometer element (125).

10. Interferometer element (125) according to any of the preceding claims, having at least a fourth mirror element (610), which is arranged in the optical path (120) in series with respect to the first (135), second (140), and third (145) mirror elements, and wherein a third distance (615) between the third (145) and fourth (610) mirror elements is modifiable.

11. Spectrometer (100) with an interferometer element (125) according to any of the preceding claims, a light source (105) for providing the light beam (110) through the interferometer element (125), and a detector (190) for capturing output light (180) emerging from the spectrometer (100).

12. Spectrometer (100) according to Claim 11, wherein the detector (190) has a plurality of detector elements (190a, 190b) that are embodied for light (110) of different wavelength ranges and/or wherein the light source (105) is designed for the non-modulatable output of light (110).

13. Method (900) for operating an interferometer (100) according to Claim 11 or 12, wherein the method (900) has the following features:
- modifying (910) the first distance (160) and the second distance (165) to obtain output light (180); and
- detecting (920) and/or analysing output light (180) emerging from the interferometer element (125).

14. Computer program configured for performing and/or controlling the method (900) according to Claim 13.

15. Machine-readable storage medium on which the computer program according to Claim 14 is stored.

## Revendications

1. Élément d'interféromètre (125) destiné à être utilisé dans un spectromètre (100), l'élément d'interféromètre (125) comportant :
- un élément de filtre micromécanique de Fabry-Pérot (FPI1, FPI2) qui comporte au moins un premier élément de miroir (135), un deuxième élément de miroir (140) et un troisième élément de miroir (145), qui sont disposés en série sur un chemin de lumière (120) de l'élément d'interféromètre (125) et dans lequel une première distance (160) entre le premier (135) et le deuxième (140) éléments de miroir et une deuxième distance (165) entre le deuxième (140) et le troisième (145) éléments de miroir peuvent être modifiées, dans lequel une cavité de résonateur d'un premier interféromètre de Fabry-Pérot (FPI1) est formée entre le premier élément de miroir (135) et le deuxième élément de miroir (140) et une cavité de résonateur d'un deuxième interféromètre de Fabry-Pérot (FPI2) est formée entre le deuxième élément de miroir (140) et le troisième élément de miroir (145),
- une unité de commande (195) destinée à commander électriquement une variation de la première (160) et de la deuxième (165) distance,
**caractérisé en ce que**
l'unité de commande (195) est réalisée et conçue pour modifier les première et deuxième distances (160, 165) au moyen d'une tension appliquée en commun et/ou d'un courant appliqué en commun, afin de modifier la première distance (160) d'une valeur de distance différente de la deuxième distance (165).

2. Élément d'interféromètre (125) selon la revendication 1, dans lequel un matériau du premier élément de miroir (135) diffère d'un matériau du deuxième élément de miroir (140) et/ou le matériau du deuxième élément de miroir (140) diffère d'un matériau du troisième élément de miroir (145), en particulier de telle sorte que les miroirs formés possèdent des dispersions différentes du saut de phase en réflexion.

3. Élément d'interféromètre (125) selon la revendication 2, dans lequel le matériau du premier (135), du deuxième (140) et/ou du troisième (145) élément de miroir est un matériau métallique ou contenant un métal et/ou présente un indice de réfraction différent.

4. Élément d'interféromètre (125) selon l'une quelconque des revendications précédentes, dans lequel l'unité de commande (195) est réalisée et conçue pour répéter de manière cyclique une modification de la première (160) et de la deuxième (165) distance.

5. Élément d'interféromètre (125) selon la revendication 4, dans lequel l'unité de commande (195) est réalisée et conçue pour modifier la première (160) et/ou la deuxième (165) distance de manière électrostatique, piézoélectrique et/ou magnétique.

6. Élément d'interféromètre (125) selon la revendication 4 ou 5, dans lequel l'unité de commande (195) est réalisée et conçue pour modifier la première (160) et/ou la deuxième (165) distance en réponse à un signal de distance (198) lu, dans lequel le signal de distance (198) représente une première (160) et/ou une deuxième (165) distance actuelle et/ou l'unité de commande (195) est réalisée pour régler, par ladite modification, une transmission maximale de lumière à travers l'élément de filtre de Fabry-Pérot (FPI1, FPI2).

7. Élément d'interféromètre (125) selon l'une quelconque des revendications précédentes, dans lequel les tensions de ressort et/ou les élasticités de ressort des premier (135), deuxième (140) et/ou troisième (145) éléments de miroir de l'élément de filtre de Fabry-Pérot (FPI1, FPI2) sont différentes.

8. Élément d'interféromètre (125) selon l'une quelconque des revendications précédentes, dans lequel l'élément de filtre de Fabry-Pérot (FPI1, FPI2) est configuré de telle sorte qu'un objet (115) à examiner à l'aide de l'élément d'interféromètre (125) doit être positionné entre les premier (135) et deuxième (140) éléments de miroir et/ou entre les deuxième (140) et troisième (145) éléments de miroir.

9. Élément d'interféromètre (125) selon l'une quelconque des revendications précédentes, comprenant un élément de filtre spectral (130) destiné à atténuer et/ou bloquer une transmission de lumière (110) se situant dans une plage de longueurs d'onde prédéterminée à travers l'élément d'interféromètre (125).

10. Élément d'interféromètre (125) selon l'une quelconque des revendications précédentes, comprenant au moins un quatrième élément de miroir (610) disposé en série sur le chemin de lumière (120) par rapport aux premier (135), deuxième (140) et troisième (145) éléments de miroir, et dans lequel une troisième distance (615) entre les troisième (145) et quatrième (610) éléments de miroir est modifiable.

11. Spectromètre (100) comprenant un élément d'interféromètre (125) selon l'une quelconque des revendications précédentes, une source de lumière (105) destinée à fournir le faisceau de lumière (110) à travers l'élément d'interféromètre (125) et un détecteur (190) destiné à détecter une lumière de sortie (180) émanant du spectromètre (100).

12. Spectromètre (100) selon la revendication 11, dans lequel le détecteur (190) comporte une pluralité d'éléments de détection (190a, 190b) conçus pour une lumière (110) se situant dans différentes plages de longueurs d'onde et/ou dans lequel la source de lumière (105) est conçue pour délivrer une lumière (110) de manière non modulable.

13. Procédé (900) de fonctionnement d'un interféromètre (100) selon la revendication 11 ou 12, dans lequel le procédé (900) comprend les étapes suivantes consistant à :
- modifier (910) la première distance (160) et la deuxième distance (165) pour obtenir une lumière de sortie (180) ; et
- détecter (920) et/ou analyser la lumière de sortie (180) émanant de l'élément d'interféromètre (125).

14. Programme informatique conçu pour mettre en œuvre et/ou commander le procédé (900) selon la revendication 13.

15. Support de stockage lisible par machine, sur lequel est stocké le programme informatique selon la revendication 14.
